# EUROPÄISCHE PATENTSCHRIFT

(11) **EP 2 851 235 B1**
(45) Veröffentlichungstag und Bekanntmachung des Hinweises auf die Patenterteilung: **26.08.2020**
(21) Anmeldenummer: 14185236.8
(22) Anmeldetag: 17.09.2014
(51) Int. Cl.: B60M 1/30

(54) **Anordnung zum Verbinden von Stromschienen-Elementen eines Fahrleitungssystems**
Device for the connection of power rail elements of a contact wire system
Agencement destiné à relier des éléments de rails conducteurs d'un système de caténaires

(30) Priorität: 23.09.2013 DE 102013015874
(43) Veröffentlichungstag der Anmeldung: 25.03.2015
(73) Patentinhaber: Rail Power Systems GmbH, 81373 München (DE)
(72) Erfinder: John, Andreas, 85635 Höhenkirchen-Siegertsbrunn (DE)
(74) Vertreter: Oppermann, Frank

(56) Entgegenhaltungen:
- WO-A2-2012/130582
- CN-A- 101 746 281
- CN-U- 201 604 537
- JP-A- 2000 318 493

## Beschreibung

Die Erfindung betrifft eine Anordnung zum Verbinden von Stromschienen-Elementen eines Fahrleitungssystems, die in einem Stoßabstand zueinander angeordnet sind und einen in der Einbaulage horizontal ausgerichteten Träger aufweisen.

Zur Fahrstromversorgung elektrisch betriebener Bahnen sind neben Oberleitungen Stromschienen bekannt, die Teil eines Fahrleitungssystems sind. Für die Errichtung einer Fahrstrecke werden mehrere Stromschienen miteinander verbunden, da die Stromschienen aus Transportgründen eine maximale Länge haben. Die einzelnen Stromschienenstücke einer Fahrstrecke werden nachfolgend als Stromschienen-Elemente bezeichnet.

Die Stromschienen-Elemente sind aufgrund von Änderungen der Umgebungstemperatur sowie Änderungen der Stromstärke Längenänderungen unterworfen, so dass ohne einen Längenausgleich nur eine begrenzte Anzahl von Stromschienen-Elementen Stoß an Stoß aneinandergefügt werden können.

Aus der WO 2012/130582 A2 ist bekannt, die Stromschienen-Elemente nicht direkt aneinander zufügen, sondern in einem Stoßabstand zueinander anzuordnen, so dass sich die Stromschienen-Elemente in einem Überlappungsbereich ausdehnen können.

Bei der Anordnung der Stromschienen-Elemente in einem Stoßabstand zueinander stellt sich das Problem der elektrischen Verbindung der Stromschienen-Elemente. Es ist bekannt, die Stromschienen-Elemente mit einer Kabelbrücke elektrisch zu verbinden. Eine Kabelbrücke lässt aber nur eine eingeschränkte Bewegung der Stromschienen-Elemente zu. Weiterhin beansprucht eine Kabelbrücke relativ viel Raum, da das Kabel wegen der Bewegung der Stromschienen-Elemente als Schleife gelegt werden muss. Darüber hinaus sind die Anschüsse der Kabel stark bruchgefährdet.

Aus der CN 101 746 281 A (CN 201 604 537 U) ist eine Anordnung zum Verbinden von Stromschienenelementen eines Fahrleitungssystems bekannt ist, wobei die Stromschienen-elemente in einem Stoßabstand zueinander angeordnet sind und einen in der Einbaulage horizontal ausgerichteten Träger aufweisen. Die Verbindungsanordnung umfasst ein Verbindungsprofil, das mit dem Träger des ersten Stromschienenelements in Längsrichtung des Stromschienenelements verschiebbar und mit dem Träger des zweiten Stromschienenelements fest verbunden ist. Das Verbindungsprofil weist zwei äußere Schenkel auf, die die Stromschienenelemente seitlich umfassen. Zur elektrischen Verbindung der Stromschienen sind im Bereich der äußeren Schenkel des Verbindungsprofils sich in Längsrichtung der Stromschienenelemente erstreckende Fahrdrähte vorgesehen.

Der Erfindung liegt die Aufgabe zugrunde, eine Anordnung zum Verbinden von Stromschienen-Elementen eines Fahrleitungssystems zu schaffen, die einen einfachen und sicheren Aufbau hat.

Die Lösung dieser Aufgabe erfolgt erfindungsgemäß mit den Merkmalen des Patentanspruchs 1. Die Gegenstände der abhängigen Ansprüche betreffen vorteilhafte Ausführungsformen der Erfindung.

Die Verbindung der einzelnen Stromschienen-Elemente eines Fahrleitungssystems in einem Stoßabstand zueinander erfolgt bei der erfindungsgemäßen Anordnung mit einem U-förmigen Verbindungsprofil, das einen mittleren Schenkel und zwei äußere Schenkel aufweist und sich durch ein relativ geringes Gewicht und eine hohe Steifigkeit auszeichnet. Der mittlere Schenkel des Verbindungsprofils ist mit dem Träger des ersten Stromschienen-Elements in Längsrichtung des Stromschienen-Elements verschiebbar und mit dem Träger des zweiten Stromschienen-Elements fest verbunden ist, so dass ein Längenausgleich aufgrund von Änderungen der Umgebungstemperatur oder der Stromstärke möglich ist. Dabei umfassen die äußeren Schenkel des Verbindungsprofils die Stromschienen-Elemente seitlich, so dass in dem Umfassungsbereich des Verbindungsprofils und der Stromschienen-Elemente die elektrische Verbindung erfolgen kann. Daher bildet die Anordnung eine kompakte Einheit.

Bei der erfindungsgemäßen Anordnung sind mit dem ersten Stromschienen-Element sich in Längsrichtung des Stromschienen-Elements erstreckende Kontaktschienen elektrisch verbunden, und mit den äußeren Schenkeln des U-förmigen Verbindungsprofils sind Kontaktelemente elektrisch verbunden, die auf die Kontaktschienen federnd vorgespannt sind. Die Kontaktelemente und Kontaktschienen erlauben einen Längenausgleich über einen großen Dehnungsbereich ohne die Gefahr eines Kabelbruchs. Weiterhin wird ein nur geringer Raum beansprucht.

Eine bevorzugte Ausführungsform der erfindungsgemäßen Verbindungsanordnung sieht für Stromschienen-Elemente, die zwei sich in der Einbaulage von dem oberen Träger nach unten erstreckende Schenkel aufweisen, eine elektrische Verbindung der beiden Schenkel des ersten Stromschienen-Elements, das längsverschiebbar mit dem Verbindungsprofil verbunden ist, mit jeweils mindestens einer sich in Längsrichtung des Stromschienen-Elements erstreckenden Kontaktschiene und eine elektrische Verbindung der äußeren Schenkel des U-förmiges Verbindungsprofils mit jeweils mindestens einem auf die Kontaktschiene federnd vorgespannten Kontaktelement vor. In der Praxis sind jeweils ein Kontaktelement und jeweils eine Kontaktschiene auf einer Seite des Stromschienen-Elements ausreichend.

Eine weitere bevorzugte Ausführungsform sieht vor, dass das mindestens eine Kontaktelement mit dem äußeren Schenkel des Verbindungsprofils mittels mindestens eines flexiblen Leiters elektrisch verbunden ist, von dem das eine Ende elektrisch mit dem Kontaktelement und das andere Ende elektrisch mit dem äußeren Schenkel des Verbindungsprofils verbunden ist. Vorzugsweise erfolgt die elektrische Verbindung von Verbindungsprofil und Kontaktelement mit mehreren flexiblen Leitern, insbesondere Kupferseilen. Diese Kabelbrücke dient bei der erfindungsgemäßen Verbindungsanordnung nicht dem Ausgleich der Längenänderungen der Stromschienen-Elemente, sondern nur zum Ausgleich geringfügiger Toleranzen.

Das mindestens eine Kontaktelement weist vorzugsweise eine federnd gegen die Kontaktschiene vorgespannte Kontaktplatte auf, an der mindestens ein Kontaktstück befestigt ist, das die Kontaktschiene kontaktiert. An den äußeren Schenkeln des Verbindungsprofils sind vorzugsweise Klemmteile vorgesehen, mit denen die einen Enden der flexiblen Leiter an den äußeren Schenkeln des Verbindungsprofils angeschlossen sind, und an den Kontaktplatten der Kontaktelemente sind Klemmteile vorgesehen sind, mit denen die anderen Enden der flexiblen Leiter an den Kontaktplatten angeschlossen sind. Dadurch ist eine einfache Montage bzw. Demontage der Bauteile möglich.

Zum Schutz vor äußeren Einflüssen sind die Klemmteile und Kontaktplatten in Gehäuseteilen angeordnet sind, die an den äußeren Schenkeln des Verbindungsprofils vorgesehen sind. Dadurch sind die elektrischen Verbindungen vor Schmutz und Feuchtigkeit geschützt. Die seitlich an den Verbindungsprofilen angebrachten Gehäuseteile können flach sein, so dass in horizontaler Richtung nur wenig Raum beansprucht wird. Auf jeden Fall wird die Bauhöhe nicht erhöht, was den Einsatz der erfindungsgemäßen Verbindungsanordnung in Tunneln erlaubt, in denen eine nur geringe Bauhöhe gefordert wird.

Bei einer weiteren bevorzugten Ausführungsform weist der obere Träger der Stromschienen-Elemente an der Oberseite eine sich in Längsrichtung der Stromschienen-Elemente erstreckende Ausnehmung zur Aufnahme einer Führungsplatte auf, wobei der mittlere Schenkel des Verbindungsprofils mit dem oberen Träger des ersten Stromschienen-Elements mittels Führungsbolzen längsverschiebbar verbunden ist, die mit der Führungsplatte verschraubt sind, die in die Ausnehmung des ersten Stromschienen-Elements eingesetzt ist. Zwischen dem mittleren Schenkel des Verbindungsprofils und dem oberen Träger des ersten Stromschienen-Elements sind vorzugsweise Gleitelemente angeordnet, so dass sich Stromschienen-Element und Verbindungsprofil weitgehend verschleißfrei gegeneinander bewegen können. Die Gleitelemente können Teil einer austauschbaren Einheit sein, die an dem Verbindungsprofil befestigt wird, so dass der Wartungsaufwand gering ist.

Der obere Träger des zweiten Stromschienen-Elements und der mittlere Schenkel des Verbindungsprofils sind vorzugsweise fest miteinander verschraubt, so dass eine Relativbewegung nicht möglich ist.

Eine weitere bevorzugte Ausführungsform sieht zwei parallel zueinander angeordnete Fahrkufen vor, die im Übergangsbereich zwischen dem ersten und zweiten Stromschienen-Element an den Schenkeln der Stromschienen-Elemente befestigt sind. Damit eine saubere Übergabe des Pantografen von der festen auf die geführte Seite gewährleistet ist, sind die jeweiligen Enden der Fahrkufen mit dem Fahrdraht bzw. einander überlappend angeordnet. Die Fahrkufen sind vorzugsweise in einem geringen Abstand parallel zueinander angeordnet, so dass sie von dem Pantografen schnell überfahren werden können.

Im Folgenden wird ein Ausführungsbeispiel der Erfindung unter Bezugnahme auf die Zeichnungen näher erläutert.

Es zeigen:
- Fig. 1: ein Ausführungsbeispiel der erfindungsgemäßen Anordnung zum Verbinden von zwei Stromschienen-Elementen in der Seitenansicht,
- Fig. 2: die Anordnung zum Verbinden von zwei Stromschienen-Elementen in der Draufsicht,
- Fig. 3: die Verbindungsanordnung in teilweiser geschnittener Darstellung und
- Fig. 4: eine Ansicht der Verbindungsanordnung von Fig. 1 aus der Richtung des Pfeils V bei abgenommenem Gehäuseteil.

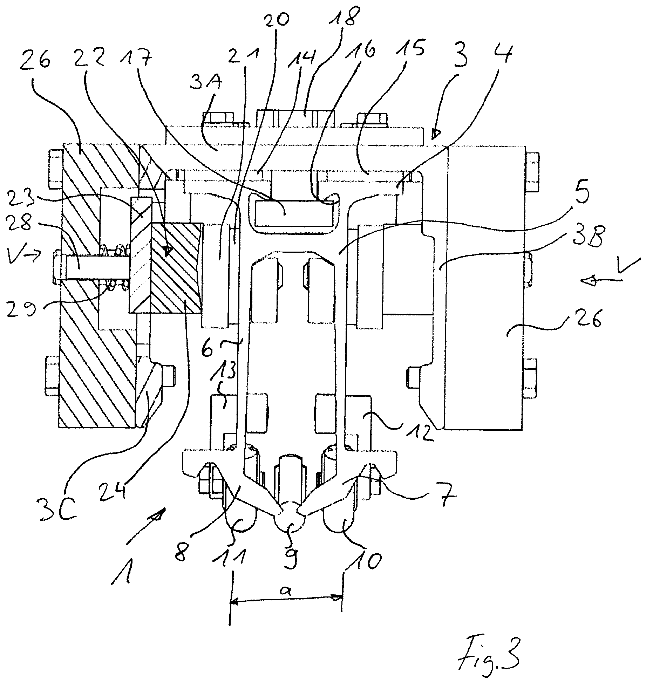

Für die Errichtung eines Fahrleitungssystems werden die einzelnen Stromschienen-Elemente 1, 2 mit den Stirnseiten in einem vorgegebenen Stoßabstand, der zwischen 500 mm und 1000 mm liegen kann, zueinander angeordnet. Die stirnseitige Verbindung erfolgt mit einem U-förmigen Verbindungsprofil 3, insbesondere ein Aluminium-Profil, das einen mittleren Schenkel 3A und zwei äußere Schenkel 3B, 3C aufweist (Fig. 3).

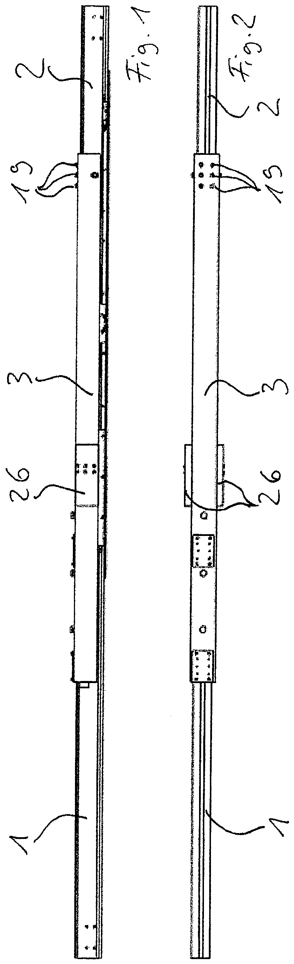

Fig. 1 zeigt die beiden Stromschienen-Elemente 1, 2 und das Verbindungsprofil 3 in der Seitenansicht. Auf der in Fig. 1 linken Seite ist das eine Stromschienen-Element, das nachfolgend als erstes Stromschienen-Element 1 bezeichnet wird, in Längsrichtung des Stromschienen-Elements verschiebbar mit dem Verbindungsprofil 3 verbunden, während das in Fig. 1 auf der rechten Seite gezeigte Stromschienen-Element, das nachfolgend als zweites Stromschienen-Element 2 bezeichnet wird, fest mit dem Verbindungsprofil 3 verbunden ist. Folglich ist ein Ausgleich von Längenänderungen nur auf der linken Seite möglich.

Fig. 3 zeigt die Verbindungsanordnung in teilweiser geschnittener Darstellung. Die Stromschienen-Elemente 1, 2 weisen einen in der Einbaulage oberen, horizontalen Träger 4 auf, von dem sich zwei parallele äußere Schenkel 5, 6 nach unten erstrecken. An die äußeren Schenkel 5, 6 des Stromschienen-Elements 1, 2 schließen sich nach innen erstreckende Klemmarme 7, 8 an, die außerhalb des Übergangsbereichs der Stromschienen-Elemente einen Fahrdraht 9 klemmend halten.

Im Übergangsbereich der Stromschienen-Elemente 1, 2 ist an den äußeren Schenkeln 5, 6 jeweils eine Fahrkufe 10, 11 befestigt. Die Befestigung der Fahrkufen 10, 11 an den äußeren Schenkeln 5, 6 erfolgt mittels geeigneter Befestigungsteile 12, 13. Die beiden Fahrkufen 10, 11 verlaufen in einem vorgegebene Abstand a parallel zueinander in Längsrichtung der Stromschienen-Elemente, wobei das eine Ende der einen Fahrkufe 10 mit dem Fahrdraht 9 des einen Stromschienen-Elements 1 und das eine Ende der anderen Fahrkufe 11 mit dem Fahrdraht 9 des anderen Stromschienen-Elements 2 überlappt und die anderen Enden der Fahrkufen 10, 11 einander überlappen, so das die Fahrdrahtstrecke nicht unterbrochen ist.

Der obere Träger 4 des ersten Stromschienen-Elements 1 liegt unter Zwischenlage von Gleitelementen 14, 15 an der Unterseite des mittleren Schenkels 3A des Verbindungsprofils 3 an. Der Träger 4 weist an der Oberseite eine sich in Längsrichtung des Stromschienen-Elements erstreckende Ausnehmung 16 auf, in die eine Führungsplatte 17 eingesetzt ist. Die Führungsplatte 17 ist mit Führungsbolzen 18 derart verschraubt, dass der obere Träger 4 des Stromschienen-Elements 1 und das Verbindungsprofil 3 in Längsrichtung verschiebbar miteinander verbunden sind. Dabei umfassen die äußeren Schenkel 3A, 3B des Verbindungsprofils 3 seitlich die äußeren Schenkel 5, 6 der Stromschienen-Elemente 1, 2.

Die feste Verbindung von dem zweiten Stromschienen-Element 2 und dem Verbindungsprofil 3 erfolgt mittels Befestigungsschrauben 19, die sich durch den mittleren Schenkel 3A des Verbindungsprofils 3 und den oberen Träger 4 des Stromschienen-Elements 2 erstrecken und mit an der Unterseite des Trägers 4 anliegenden Befestigungsplatten verschraubt sind, die in den Figuren nicht dargestellt sind (Fig. 1 und Fig. 2).

Nachfolgend wird die elektrische Verbindung des ersten Stromschienen-Elements 1 mit dem einen Ende des Verbindungsprofils 3 beschrieben.

An den beiden äußeren Schenkeln 5, 6 des ersten Stromschienen-Elements 1 ist unter Zwischenlage von geeigneten Kontaktmitteln 20, die einen verbesserten elektrischen Kontakt herstellen, jeweils eine Kontaktschiene 21 befestigt, die sich in Längsrichtung des Stromschienen-Elements 1 erstreckt. Auf der Höhe der Kontaktschienen 21 befindet sich an den äußeren Schenkeln 3B, 3C des Verbindungsprofils 3 jeweils ein Kontaktelement 22. Die Kontaktelemente 22 auf beiden Seiten des Stromschienen-Elements 1 weisen jeweils eine äußere Kontaktplatte 23 auf, an der ein inneres Kontaktstück 24, insbesondere eine Metallkohle, befestigt ist, die mit der zugehörigen Kontaktschiene 21 kontaktiert.

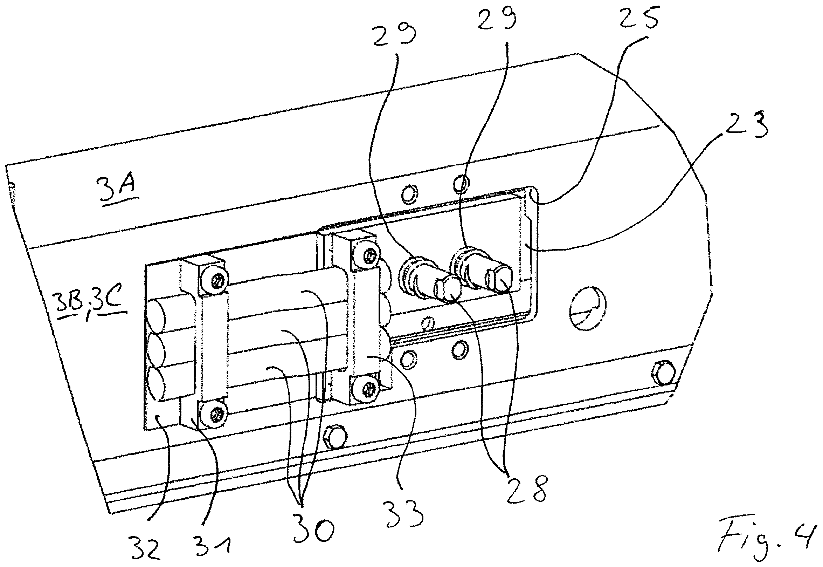

Die in Ausnehmungen 25 der äußeren Schenkel 3B, 3C des Verbindungsprofils 3 angeordneten Kontaktplatten 23 sind federnd gegen die Kontaktschienen 21 vorgespannt (Fig. 4). Die seitlichen Ausnehmungen 25 des Verbindungsprofils 3 sind mit Gehäuseteilen 26 dicht verschlossen. Die Vorspannung wird mit auf Führungsbolzen 28 sitzenden Federn 29 aufgebracht, die sich einerseits an der Innenseite der Gehäuseteile 26 und andererseits an den Kontaktplatten 23 abstützen (Fig. 4).

Folglich kann ein Strom über das erste Stromschienen-Element 1, die Kontaktschienen 21, die Kontaktstücke 24 und die Kontaktplatten 23 fließen. Die Herstellung einer elektrischen Verbindung zwischen den beiden Kontaktplatten 23 und den äußeren Schenkeln 3B, 3C des ersten Stromschienen-Elements erfolgt mittels flexibler Leiter 30, insbesondere Kupferseile 30, die einerseits mit der Kontaktplatte 23 und andererseits mit dem äußeren Schenkel 3B, 3C des Verbindungsprofils 3 elektrisch verbunden sind. An den äußeren Schenkeln 3B, 3C des Verbindungsprofils 3 sind Klemmteile 31 befestigt, mit denen die einen Enden der Kupferseile 30 an dem jeweiligen äußeren Schenkel 3B, 3C des Verbindungsprofils 3 unter Zwischenlage von geeigneten Kontaktmitteln 32 angeschlossen sind. Als Kontaktmittel können mit einer Cu-Schicht versehene Al-Platten 32 (Cupal-Blech) Verwendung finden. Die anderen Enden der Kupferseile 30 sind mit an den Kontaktplatten 23 befestigten Klemmteilen 33 mit den Kontaktplatten 23 elektrisch verbunden, so dass der Strom von den Kontaktplatten 23 über die Kupferseile 30 zu dem Verbindungsprofil 3 fließen kann, das elektrisch mit dem zweiten Stromschienen-Element 2 verbunden ist.

Die elektrische Verbindung des Verbindungsprofils 3 und des zweites Stromschienen-Elements 2 ist unkritisch, da sich das zweite Stromschienen-Element 2 und das Verbindungsprofil 3 nicht gegeneinander bewegen können. Die elektrische Verbindung kann unterschiedlich ausgebildet sein. Beide Bauteile können zur Herstellung der elektrischen Verbindung miteinander verschraubt sein.

## Patentansprüche

1. Anordnung zum Verbinden von Stromschienen-Elementen (1, 2) eines Fahrleitungssystems, die in einem Stoßabstand zueinander angeordnet sind und einen in der Einbaulage horizontal ausgerichteten Träger (4) aufweisen, wobei die Verbindungsanordnung ein Verbindungsprofil (3) umfasst, das mit dem Träger (4) des ersten und zweiten Stromschienen-Elements (1, 2) verbunden ist, wobei das Verbindungsprofil (3) mit dem Träger (4) des ersten Stromschienen-Elements (1) in Längsrichtung des Stromschienen-Elements verschiebbar und mit dem Träger (4) des zweiten Stromschienen-Elements (2) fest verbunden ist,
**dadurch gekennzeichnet, dass**
das Verbindungsprofil (3) ein U-förmiges Verbindungsprofil ist, das zwei äußere Schenkel (3B, 3C), die die Stromschienen-Elemente (1, 2) seitlich umfassen, und einen mittleren Schenkel aufweist, der mit dem Träger (4) des ersten Stromschienen-Elements (1) in Längsrichtung des Stromschienen-Elements verschiebbar und mit dem Träger (4) des zweiten Stromschienen-Elements (2) fest verbunden ist, und
mit dem ersten Stromschienen-Element (1) sich in Längsrichtung des Stromschienen-Elements erstreckende Kontaktschienen (21) elektrisch verbunden sind, und mit den äußeren Schenkeln des U-förmigen Verbindungsprofils (3) Kontaktelemente (22) elektrisch verbunden sind, die auf die Kontaktschienen federnd vorgespannt sind.

2. Anordnung nach Anspruch 1, **dadurch gekennzeichnet, dass** die Stromschienen-Elemente (1, 2) zwei sich in der Einbaulage von dem oberen Träger (4) nach unten erstreckende Schenkel (5, 6) aufweisen, wobei mit den beiden Schenkeln (5, 6) des ersten Stromschienen-Elements (1) jeweils mindestens eine sich in Längsrichtung des Stromschienen-Elements erstreckende Kontaktschiene (21) elektrisch verbunden ist, und mit den äußeren Schenkeln (3B, 3C) des U-förmiges Verbindungsprofils jeweils mindestens ein auf die Kontaktschiene (21) federnd vorgespanntes Kontaktelement (22) elektrisch verbunden ist.

3. Anordnung nach Anspruch 2, **dadurch gekennzeichnet, dass** das mindestens eine Kontaktelement (22) mit dem äußeren Schenkel (3B, 3C) des Verbindungsprofils (3) mittels mindestens eines flexiblen Leiters (30) elektrisch verbunden ist, von dem das eine Ende elektrisch mit dem Kontaktelement (22) und das andere Ende elektrisch mit dem äußeren Schenkel (3B, 3C) des Verbindungsprofils (3) verbunden ist.

4. Anordnung nach Anspruch 2 oder 3, **dadurch gekennzeichnet, dass** das mindestens eine Kontaktelement (22) eine federnd gegen die Kontaktschiene (21) vorgespannte Kontaktplatte (23) aufweist, an der mindestens ein Kontaktstück (24) befestigt ist, das die Kontaktschiene (21) kontaktiert.

5. Anordnung nach Anspruch 4, **dadurch gekennzeichnet, dass** an den äußeren Schenkeln (3A, 3B) des Verbindungsprofils (3) Klemmteile (31) vorgesehen sind, mit denen die einen Enden der flexiblen Leiter an den äußeren Schenkeln (3B, 3C) des Verbindungsprofils (3) angeschlossen sind, und an den Kontaktplatten (23) der Kontaktelemente Klemmteile (33) vorgesehen ist, mit denen die anderen Enden der flexiblen Leiter (30) an den Kontaktplatten (23) angeschlossen sind.

6. Anordnung nach Anspruch 5, **dadurch gekennzeichnet, dass** die Klemmteile (31, 33) und Kontaktplatten (23) in Gehäuseteilen (26) angeordnet sind, die an den äußeren Schenkeln (3B, 3C) des Verbindungsprofils (3) vorgesehen sind.

7. Anordnung nach Anspruch 6, **dadurch gekennzeichnet, dass** zwischen den Gehäuseteilen (26) und der Kontaktplatte (23) Federn (29) angeordnet sind, die die Kontaktplatte (23) federnd gegen die Kontaktschiene (21) vorspannen.

8. Anordnung nach einem der Ansprüche 1 bis 7, **dadurch gekennzeichnet, dass** der obere Träger (4) der Stromschienen-Elemente (1, 2) an der Oberseite eine sich in Längsrichtung der Stromschienen-Elemente erstreckende Ausnehmung (16) zur Aufnahme einer Führungsplatte (17) aufweist, wobei
der mittlere Schenkel (3A) des Verbindungsprofils (3) mit dem oberen Träger (4) des ersten Stromschienen-Elements (1) mittels Führungsbolzen (18) längsverschiebbar verbunden ist, die mit der Führungsplatte (17) verschraubt sind, die in die Ausnehmung (16) des ersten Stromschienen-Elements (1) eingesetzt ist.

9. Anordnung nach Anspruch 8, **dadurch gekennzeichnet, dass** zwischen dem mittleren Schenkel (3A) des Verbindungsprofils (3) und dem oberen Träger (4) des ersten Stromschienen-Elements (1) Gleitelemente (14, 15) angeordnet sind.

10. Anordnung nach einem der Ansprüche 1 bis 9, **dadurch gekennzeichnet, dass** der obere Träger (4) des zweiten Stromschienen-Elements (2) und der mittlere Schenkel (3A) des Verbindungsprofils (3) miteinander verschraubt sind.

11. Anordnung nach einem der Ansprüche 2 bis 10, **dadurch gekennzeichnet, dass** sich an die Schenkel (5, 6) der Stromschienen-Elemente (1, 2) nach innen erstreckende Klemmarme (7, 8) anschließen, die einen Fahrdraht (9) klemmend halten.

12. Anordnung nach einem der Ansprüche 2 bis 11, **dadurch gekennzeichnet, dass** im Übergangsbereich zwischen dem ersten und zweiten Stromschienen-Element (1, 2) an den Schenkeln (5, 6) der Stromschienen-Elemente zwei parallel zueinander angeordnete Fahrkufen (10, 11) befestigt sind, wobei die einen Enden der Fahrkufen (10, 11) mit dem Fahrdraht (9) und die anderen Enden der Fahrkufen (10, 11) einander überlappen.

## Claims

1. Assembly for connecting power rail elements (1, 2) of an overhead contact system, which are arranged at an abutting distance from one another and have a support (4) which is horizontally aligned in the installed position, the connection assembly comprising a connection profile (3) which is connected to the support (4) of the first and second power rail element (1, 2), the connection profile (3) being connected to the support (4) of the first power rail element (1) so as to be displaceable in the longitudinal direction of the power rail element and being rigidly connected to the support (4) of the second power rail element (2), **characterised in that** the connection profile (3) is a U-shaped connection profile that has two outer legs (3B, 3C) which laterally enclose the power rail elements (1, 2) and has a central leg which is connected to the support (4) of the first power rail element (1) so as to be displaceable in the longitudinal direction of the power rail element and is rigidly connected to the support (4) of the second power rail element (2), and contact rails (21) are electrically connected to the first power rail element (1) and extend in the longitudinal direction of the power rail element, and contact elements (22) which are spring-loaded onto the contact rails are electrically connected to the outer legs of the U-shaped connection profile (3).

2. Assembly according to claim 1, **characterised in that** the power rail elements (1, 2) have two legs (5, 6) which extend downwards from the upper support (4) in the installed position, at least one contact rail (21) being electrically connected to each of the two legs (5, 6) of the first power rail element (1) and extending in the longitudinal direction of the power rail element, and at least one contact element (22) which is spring-loaded onto the contact rail (21) being electrically connected to each of the outer legs (3B, 3C) of the U-shaped connection profile.

3. Assembly according to claim 2, **characterised in that** the at least one contact element (22) is electrically connected to the outer leg (3B, 3C) of the connection profile (3) by means of at least one flexible conductor (30), one end of which is electrically connected to the contact element (22) and the other end of which is electrically connected to the outer leg (3B, 3C) of the connection profile (3).

4. Assembly according to either claim 2 or claim 3, **characterised in that** the at least one contact element (22) has a contact plate (23) which is spring-loaded against the contact rail (21) and to which at least one contact piece (24) is fastened which contacts the contact rail (21).

5. Assembly according to claim 4, **characterised in that** clamping parts (31) by means of which the one ends of the flexible conductors are connected to the outer legs (3B, 3C) of the connection profile (3) are provided on the outer legs (3A, 3B) of the connection profile (3), and clamping parts (33) by means of which the other ends of the flexible conductors (30) are connected to the contact plates (23) are provided on the contact plates (23) of the contact elements.

6. Assembly according to claim 5, **characterised in that** the clamping parts (31, 33) and contact plates (23) are arranged in housing parts (26) which are provided on the outer legs (3B, 3C) of the connection profile (3).

7. Assembly according to claim 6, **characterised in that** springs (29) are arranged between the housing parts (26) and the contact plate (23) and spring-load the contact plate (23) against the contact rail (21).

8. Assembly according to any of claims 1 to 7, **characterised in that** the upper support (4) of the power rail elements (1, 2) has, on the upper side, a recess (16) extending in the longitudinal direction of the power rail elements for receiving a guide plate (17), the central leg (3A) of the connection profile (3) being longitudinally displaceably connected to the upper support (4) of the first power rail element (1) by means of guide bolts (18) which are screwed to the guide plate (17), which is inserted into the recess (16) in the first power rail element (1).

9. Assembly according to claim 8, **characterised in that** sliding elements (14, 15) are arranged between the central leg (3A) of the connection profile (3) and the upper support (4) of the first power rail element (1).

10. Assembly according to any of claims 1 to 9, **characterised in that** the upper support (4) of the second power rail element (2) and the central leg (3A) of the connection profile (3) are screwed together.

11. Assembly according to any of claims 2 to 10, **characterised in that** clamping arms (7, 8) which extend inwards and hold a contact wire (9) in a clamping manner adjoin the legs (5, 6) of the power rail elements (1, 2).

12. Assembly according to any of claims 2 to 11, **characterised in that**, in the transition region between the first and second power rail element (1, 2), two parallel contact skids (10, 11) are fastened to the legs (5, 6) of the power rail elements, the one ends of the contact skids (10, 11) overlapping with the contact wire (9) and the other ends of the contact skids (10, 11) overlapping with one another.

## Revendications

1. Agencement pour relier des éléments de rail conducteur (1, 2) d'un système de ligne de contact, qui sont disposés à une distance des bords l'un de l'autre et présentent un support (4) aligné horizontalement dans la position montée, l'agencement de liaison comprenant un profilé de liaison (3) qui est relié au support (4) des premier et second éléments de rail conducteur (1, 2), le profilé de liaison (3) étant relié au support (4) du premier élément de rail conducteur (1) de manière déplaçable dans la direction longitudinale de l'élément de rail conducteur et est relié de manière fixe au support (4) du deuxième élément de rail conducteur (2),
**caractérisé en ce que** le profilé de liaison (3) est un profilé de liaison en forme de U qui présente deux côtés externes (3B, 3C), qui comprennent latéralement les éléments de rail conducteur (1, 2), et un côté médian qui est relié au support (4) du premier élément de rail conducteur (1) de manière déplaçable dans la direction longitudinale de l'élément de rail conducteur et est relié de manière fixe au support (4) du deuxième élément de rail conducteur (2), et
des rails de contact (21) qui s'étendent dans la direction longitudinale de l'élément de rail conducteur sont reliés électriquement au premier élément de rail conducteur (1), et des éléments de contact (22), qui sont précontraints élastiquement sur les rails de contact, sont reliés électriquement aux côtés externes du profilé de liaison en forme de U (3).

2. Agencement selon la revendication 1, **caractérisé en ce que** les éléments de rail conducteur (1, 2) présentent deux côtés (5, 6) s'étendant vers le bas depuis le support supérieur (4) en position montée, où dans chaque cas au moins un rail de contact (21) s'étendant dans la direction longitudinale de l'élément de rail conducteur est relié électriquement aux deux côtés (5, 6) du premier élément de rail conducteur (1), et dans chaque cas au moins un élément de contact (22) précontraint élastiquement sur le rail de contact (21) est relié électriquement aux côtés externes (3B, 3C) du profilé de liaison en forme de U.

3. Agencement selon la revendication 2, **caractérisé en ce que** le au moins un élément de contact (22) est relié électriquement au côté externe (3B, 3C) du profilé de liaison (3) au moyen d'au moins un conducteur flexible (30) dont une extrémité est reliée électriquement à l'élément de contact (22) et l'autre extrémité est reliée électriquement au côté externe (3B, 3C) du profilé de liaison (3).

4. Agencement selon la revendication 2 ou 3, **caractérisé en ce que** le au moins un élément de contact (22) présente une plaque de contact (23) précontrainte élastiquement contre le rail de contact (21) sur laquelle est fixée au moins une pièce de contact (24) qui est en contact avec le rail de contact (21).

5. Agencement selon la revendication 4, **caractérisé en ce que** sur les côtés externes (3A, 3B) du profilé de liaison (3) sont prévues des pièces de serrage (31) avec lesquelles des extrémités des conducteurs flexibles sont raccordées aux côtés externes (3B, 3C) du profilé de liaison (3), et sur les plaques de contact (23) des éléments de contact, il est prévu des pièces de serrage (33) avec lesquelles les autres extrémités des conducteurs flexibles (30) sont raccordées aux plaques de contact (23).

6. Agencement selon la revendication 5, **caractérisé en ce que** les pièces de serrage (31, 33) et les plaques de contact (23) sont disposées dans des parties de boîtier (26) qui sont prévues sur les côtés externes (3B, 3C) du profilé de liaison (3).

7. Agencement selon la revendication 6, **caractérisé en ce qu'**entre les parties de boîtier (26) et la plaque de contact (23) sont disposés des ressorts (29) qui précontraignent élastiquement la plaque de contact (23) contre le rail de contact (21).

8. Agencement selon l'une des revendications 1 à 7, **caractérisé en ce que** le support supérieur (4) des éléments de rail conducteur (1, 2) présente sur le côté supérieur un évidement (16) s'étendant dans la direction longitudinale des éléments de rail conducteur servant à recevoir une plaque de guidage (17), dans lequel
le côté médian (3A) du profilé de liaison (3) est relié au support supérieur (4) du premier élément de rail conducteur (1) de manière déplaçable longitudinalement au moyen de boulons de guidage (18) qui sont vissés avec la plaque de guidage (17) qui est insérée dans l'évidement (16) du premier élément de rail conducteur (1).

9. Agencement selon la revendication 8, **caractérisé en ce que** des éléments coulissants (14, 15) sont disposés entre le côté médian (3A) du profilé de liaison (3) et le support supérieur (4) du premier élément de rail conducteur (1).

10. Agencement selon l'une des revendications 1 à 9, **caractérisé en ce que** le support supérieur (4) du deuxième élément de rail conducteur (2) et le côté médian (3A) du profilé de liaison (3) sont vissés ensemble.

11. Agencement selon l'une des revendications 2 à 10, **caractérisé en ce que** des bras de serrage (7, 8) s'étendant vers l'intérieur, qui maintiennent par serrage un fil de contact (9), font suite aux côtés (5, 6) des éléments de rail conducteur (1, 2).

12. Agencement selon l'une des revendications 2 à 11, **caractérisé en ce que**, dans la zone de transition entre les premier et deuxième éléments de rail conducteur (1, 2) deux patins de contact (10, 11) disposés parallèlement l'un à l'autre sont fixés sur les côtés (5, 6) des éléments de rail conducteur, des extrémités des patins de contact (10, 11) se chevauchant avec le fil de contact (9) et les autres extrémités des patins de contact (10, 11) se chevauchant.
